(19) Europäisches Patentamt
European Patent Office
Office européen des brevets

(11) **EP 2 653 448 B1**

## (12) EUROPEAN PATENT SPECIFICATION

(45) Date of publication and mention
of the grant of the patent:
**28.02.2018 Bulletin 2018/09**

(51) Int Cl.:
***C02F 1/32*** *(2006.01)*          ***C02F 1/72*** *(2006.01)*
***C02F 1/50*** *(2006.01)*

(21) Application number: **12164979.2**

(22) Date of filing: **20.04.2012**

(54) **Water treatment**

Wasserbehandlung

Traitement de l'eau

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.10.2013 Bulletin 2013/43**

(73) Proprietor: **Kemira Oyj
00180 Helsinki (FI)**

(72) Inventors:
• **Öjstedt, Ulrik
253 60 RAMLÖSA (SE)**
• **Gramstad, Robin
222 22 LUND (SE)**
• **Jansson, Kaj
33250 Tampere (FI)**

• **Kolari, Marko
01260 Vantaa (FI)**

(74) Representative: **Awapatent AB
P.O. Box 5117
200 71 Malmö (SE)**

(56) References cited:
**WO-A1-02/054866          WO-A2-2012/004772
US-A1- 2007 163 966**

• **R. GEHR, D. CHEN, M. MOREAU: "Performic acid
(PFA): tests on an advanced primary effluent
show promising disinfection performance",
WATER SCIENCE & TECHNOLOGY, vol. 59, no.
1, January 2009 (2009-01), pages 89-96,
XP002682794,**

## Description

FIELD OF THE INVENTION

The present invention relates to disinfection of water in order to reduce the presence of microorganisms, including bacteria, viruses and fungi.

TECHNICAL BACKGROUND

At present, the use, and thereby the need, of purified water is growing rapidly around the world. Efforts are being made to produce pure water from less pure water than before using less chemicals, without, however, considerably raising the cost of the purification process. In addition, there is a need for the use of biodegradable or otherwise less harmful chemicals, and also chemicals which would not form compounds having detrimental health effects. Purification of raw water to produce drinking water normally includes mechanical filtration, usually biological processing, and adding the water purifying chemicals in different steps of the purification process to enhance the purification and/or to oxidize the organic and inorganic matter and organisms.

Chlorination is traditionally used to disinfect waste water. Chlorination is quite effective against bacteria, but has lower efficiency against for example viruses. In addition, chlorination gives rise to potentially toxic and mutagenic by-products, which has lead to the decrease in of chlorination as disinfection method.

UV-radiation has become an increasingly popular method for disinfection of water due to it being an environmentally friendly, non-chemical method. However, using UV-radiation at conventional levels often is not effective enough for reducing the level of microorganisms to acceptable levels/levels required by the authorities. To meet these requirements, users need to invest large sums in more UV- radiation capacity or in increased frequency of cleaning and/or exchange of UV-lamps.

Enteric viruses are viruses that can multiply in the gastrointestinal tract of humans or animals. More than 140 enteric viruses are known to infect humans, including viruses causing common gastrointestinal illness, hepatitis, meningitis, poliomyelitis and non-specific febrile illness. In addition, some enteric viruses have also been associated with chronic diseases, for example diabetes mellitus and chronic fatigue syndrome.

Current water disinfection processes are only able to reduce the amount of enteric viruses in the water by using high doses of chemicals.

Apart from using quite costly additives, large amounts of additives and/or not so very environmental friendly chemical additives, the known methods used for the reduction of microorganisms in water are not as effective in reducing the amount of enteric viruses.

The publication "Inactivation of enteric microorganisms with chemical disinfectants, UV irradiation and combined chemical/UV treatments" by J. Koivunen and H Heinonen-Tanski, Water Research 39 (2005) 1519-1526 discloses disinfection efficiencies between peracetic acid (PAA), hydrogen peroxide and sodium hypochlorite. Evaluation of synergistic effects with combined use of UV is also disclosed. However, combined PAA/UV disinfection did not achieve any significant synergistic effects compared to only using PAA. Peracetic acid (PAA) is an effective disinfectant against enteric bacteria, but not as effective against viruses, bacterial spores and protozoan cysts. Only by using high doses, e.g. 7-15 mg/l, of PAA can MS2 be inactivated (1 - 1.5 log reduction). PAA in combination with UV-irradiation has shown to be effective against enteric bacteria, but no synergistic effect is seen in the reduction of the amount of MS2, compared to PAA-treatment alone.

The publication "Performic acid (PFA): test on an advanced primary effluent show promising disinfection performance" by R Gehr et al, Water Science & Technology, vol 59, no 1, 2009, p. 89-96 discloses the use of performic acid as a disinfection method for wastewater.

US2007/163966 discloses a process for refurbishing effluent water within the food processing industry, wherein peroxyformic acid is used as a biocide.

There still exist a need for improvement of the reduction of microorganisms like enteric viruses, but also reducing the amount of additives needed and using more environmentally friendly alternatives.

SUMMARY OF THE INVENTION

An object of the present invention is to provide a process for reducing the presence of microorganisms, especially enteric microorganisms such as enteric viruses and bacteria, in water.

Another object of the present invention is to reduce the amounts of chemical additives and/or providing more environmentally friendly chemicals in the disinfection of water.

A further object of the present invention is to reduce fouling of UV lamps used in the process according to the present invention.

The present invention relates to a process for the reduction of the presence of microorganisms in water using an energy source and an additive. The energy source is UV-radiation and the additive comprises performic acid (PFA). Microorganisms influenced by the present method may be bacteria and/or viruses. Among viruses bacteriophages, such as MS2, may be of interest to remove with the present method. According to one embodiment the present method is directed to eliminate enteric bacteria such as Escherichia coli, Enterococcus faecalis and Enterococcus faecium and/or enteric viruses. By combining PFA and UV-radiation a higher reduction of bacteria and viruses can be achieved compared to current processes and also compared to using only PFA or only UV-radiation. Thus, the combination achieves an effect which can be additive or synergistic. Existing plants for water disinfection can readily be adapted to implement the current invention.

The water to be treated is subjected to UV radiation during and/or after the addition of the additive containing PFA to the water.

The PFA is added to the waters to be disinfected in an amount of 0.1 to 5 mg/l, preferably 0.2-4 mg/l, preferably 0.3-2 mg/l, and preferably 0.4-1 mg/l.

The addition of PFA is intermittently performed as an instantaneous chock dosing in an amount of 10 to 50 mg/l.

The present invention also relates to use of an energy source and an additive for reduction of the presence of microorganisms in water wherein the energy source is UV radiation and the additive comprises performic acid.

SPECIFIC EMBODIMENTS OF THE INVENTION

In the present application the wording "microorganisms" includes bacteria, viruses, fungi, protest, archaea, and prions.

Escherichia, especially E. coli, and Enterococci, especially E. faecalis and E. faecium, are common indicator bacteria used in water quality testing and MS2 bacteriophage is a common surrogate for enteric viruses which could potentially contaminate field water samples.

Escherichia coli bacteria are of the family Enterobacteriaceae and are the main indicator bacteria used in water purity tests. The presence of E. coli signifies that the water may be contaminated with human or animal fecal waste and thus serves as an indicator that other potentially harmful bacteria or viruses may be present. E. coli is most commonly used in water-testing because it's response to ultraviolet radiation has been well-characterized.

Enterococcus is a genus of lactic acid bacteria of the phylum Firmicutes. Enterococci are Gram-positive cocci that often occur in pairs (diplococci) or short chains. Two species are common commensal organisms in the intestines of humans: E. faecalis and E. faecium. In water, the acceptable level of contamination of these bacteria is very low. The level of Enterococcus spp. is used as standard for water quality control within some areas.

MS2 bacteriophage is of the family Leviviridae and has positive single stranded RNA and has the same shape and size as enteric viruses. It typically infects Bacillus subtilis, but is commonly propagated in Escherichia Coli in the laboratory setting. MS2 is a very common surrogate for enteroviruses that infect water supplies, as it has been demonstrated that the phage responds similarly to UV light treatment. MS2's similarity in UV inactivation, coupled with its ease and safety of propagation in the laboratory setting makes it the perfect surrogate organism for UV testing. In fact, the EPA actually defines MS2 as "a non-pathogenic bacteriophage commonly used as a challenge organism in UV reactor validation testing".

According to the present invention, PFA is added to the waters to be treated in an amount of 0.1 to 50 mg PFA per litre water to be treated.

To be able to disinfect the waters an amount of 0.1 to 5 mg PFA per litre water should be added, preferably 0.2-4 mg/l, preferably 0.3-2 mg/l, and preferably 0.4-1 mg/l. However, due to the organic material and/or microorganisms present in the process the efficiency of the UV lamp may be reduced due to fouling, specifically at the position of the apparatus where the UV lamp is radiating the waters. By intermittently increasing the dosage of PFA the process is run without reduced UV effect due to fouling. The process runs with a continuous addition of PFA. The continuous addition of PFA is mainly kept at an amount of 0.1 to 5 mg PFA per litre water but intermittently an increased dose, a chock dose, of PFA is instantaneously added to the waters. Before and after each addition of a chock dose of PFA, the addition of PFA is maintained in an amount of 0.1-5 mg/l. The reduction of the fouling of the apparatus at the UV lamp is performed by instantaneous chock dosing using PFA amounts at the higher end of the above disclosed range, e.g. 10-50 mg/l or 15-40 mg/l. Depending on the intensity of fouling on the UV lamp surfaces, a weekly sum of shock dosage periods is between 0.3 - 30 h. The shock dosage may be applied using different sequences, like short dosages applied often or long dosages applied less frequently. In one embodiment the shock dosage is applied 1 - 3 times a week, in another embodiment every 6 hours.The PFA containing additive may be an equilibrium solution of PFA. PFA is added to the water and allowed to react. The water to be disinfected is subjected to UV-radiation during and/or after the addition of PFA to the water. The reaction time for PFA is not limited but typically it is up to 60 minutes, preferably 1 to 30 min, preferably 2-10 minutes. PFA degrades within a few hours and the final degradation products after entering the recipient is water and carbon dioxide. Hence, PFA has low negative effects on the environment.

Combining PFA-treatment with UV-radiation is more effective in reducing the amounts of MS2 (the surrogate test organism for enteric viruses) than these disinfectants used alone and separately. An explanation for this may be free radicals produced by photolysis of PFA.

Fecal coliforms are a group of bacteria species (mainly Eschericha) present in the intestinal tract and feces of warm-blooded animals and humans. The presence of these bacteria in water indicates the presence of human or animal waste and that pathogens (disease-causing organisms) may be in the water system.

Combining PFA-treatment with UV-radiation is also more effective in reducing the amounts of E.coli and Enterococci than these disinfectants used alone and separately.

The UV-radiation dose is typically 5 - 50, preferably 10 - 30 mJ/cm$^2$. The dose is determined by the intensity of the UV-radiation and by its duration.

The wavelength of the UV-radiation is 180 - 320 nm, preferably 200 - 290 nm.

The water to be treated is for example waste water, cooling water, process water or drinking water.

EXAMPLES

Example 1

The source of performic acid used in the tests was DEX-135® (Kemira, equilibrium solution with 13.5 w/v-% PFA (13.5g PFA/100ml)).

Freshly prepared DEX-135® was added to wastewater effluent (500 ml) that was spiked with RNA coliphages (MS2) to contain 38534 PFU/ml MS2 and mixed continuously with a magnetic stirrer. The PFA was quenched after 10 minutes contact time by adding 500 $\mu$l 10 % Na$_2$S$_2$O$_3$ (Merck), and 5 $\mu$L catalase (Sigma Catalase) to this 500 ml PFA treated effluents. The tested concentrations of PFA in the effluent were from 0.5 up to 7 ppm.

UV disinfection using collimator device: The test was done with 50ml of wastewater effluent The waters were taken in to the cylinders and that was spiked with RNA coliphages (MS2) to contain 38534 PFU/ml MS2 and mixed. 10 ml of this water was taken in to the Petri dishes (diameter 6 cm) and exposed to UV using collimated beam (intensity I0 on the surface of water 0.22mWs/cm$^2$) with continue mixing with magnet stirrer. The UV exposed time was 0.5, 1 and 2 minutes corresponding the UV doses 6.6, 13.2 and 26.4 mWs/cm$^2$. The wavelenght was 253.7 nm.

PFA+UV disinfection experiment: Wastewater effluent that was spiked with RNA coliphages (MS2) to contain 38534 PFU/ml MS2 and mixed was first treated by PFA as a dose of 0.75 mg/l wastewater sample. After 4 minutes contact time this PFA treated wastewater was flowed through the UV radiation collimator device with specific flow rate so the UV dose was 21.5mWs/cm$^2$. The wastewater sample for microbial analysis was taken at 9 minutes after PFA treatment (i.e. prior to UV treatment) and just after UV treatment at total 10 minutes contact time of PFA treatment. The residual PFA was quenched as done in performic acid experimental tests.

Determination of microorganisms: The microbiological analyses were started within a few minutes after disinfection segment of the experiment. MS2 coliphages were determined on phage TYG-agar by basing on old double-agar-layer-method (Adams, 1959), with *Escherichia coli* ATCC 15597 and 13706, respectively as host bacteria and overnight incubation at 37°C. After incubation, virus plaques were counted and results calculated as PFU/ml (PFU = Plaque Forming Unit) and reduction percentage were also determined. The determination methods for coliphages used are according to ISO 10705-2 (for somatic coliphages).

The combination of UV and PFA as well as the efffect of the two treatments alone where tested against MS2 coliphages. The required dose for 90 % /(1 log) removal was calculated and is presented in Table 1. The synergistic index was calculated by the method presented by F. C. Kull et al., Applied Microbiology, vol. 9 (1961), p. 538. Here, the synergistic index was calculated using the following formula:

$$\text{Synergistic index } SI = Qa/QA + Qb/QB.$$

When applying this formula to the biocide system tested in the present context, the parameters in the formula have the following meanings:

For example, at 1 log reduction:

Qa=Concentration of biocide A in biocide mixture
QA=concentration of A as the only biocide
Qb=Concentration of biocide B in biocide mixture
QB=concentration of B as the only biocide.

Synergistic index was calculated for 1 log reduction. In all calculations either Qa (PFA dose) or Qb (UV dose) is chosen from the used ones in the study and the other is calculated from the linear adjustment of the data points.

The calculated synergy index (SI) using these results is 1 (= additive effect). This indicates that the combination effect of UV and PFA is at least additive and close to synergistic.

Table 1. Comparison of the PFA and UV results in effluent wastewater for 1 log reduction of MS2.

| microbes | PFA (mg/l) | UV (mWs/cm$^2$) | PFA mg/l + UV mWs/cm$^2$ |
|---|---|---|---|
| MS2 | 3.5 | 27.2 | 0.75+21.5 |

Example 2.

Since the wastewater effluent might contain less than 100 cfu/ml (10$^4$ cfu/100 ml) of *E. coli* and Enterococci these microorganisms were spiked to wastewater so that the numbers of these microorganisms would be at the level of 10$^4$-10$^5$ cfu/ml allowing to study better reduction. *E. coli* ATTC 15597 and *Enterococcus faecalis* ATCC 29212 were produced in tryptone yeast extract broth as overnight shaker cultures at 37°C and kept at 4°C during the experiment. The numbers of *E. coli* and Enterococci (containing thus both the natural and spiked ones) were enumerated from effluent and effluent after disinfections by using Chromocult agar (Merck) and confirmed by indole production for *E. coli* and Slanetz-Bartley agar (Labema) for Enterococci incubated at 37°C for 1 and 2 days, respectively.

The fresh spiked wastewater effluent was treated with fresh DEX-135® as concentrations of PFA 0.25 mg/l, 0.5 mg/l, and 1.0 mg/l in wastewater so that the contact time under mixing were 10 minutes and the reaction will be stopped with 1 ml 10% Na$_2$S$_2$O$_3$ and 10 μL catalase (Sigma) for 1 L reaction mixture. The enumerations of *E. coli* and Enterococci were done as for fresh wastewater keeping the mixture at 4°C for less than 5 hours before starting the analysis.

Only UV-irradiation: The spiked wastewater effluent was mixed and treated in a collimator device (UV intensity of 0.22 mW/cm$^2$ on surface of the solution) to treat UV-irradiations using UV 15 mWs/cm$^2$ alone, UV 25 mWs/cm$^2$ alone and UV 50 mWs/cm$^2$ alone. The enumerations of *E. coli* and Enterococci were determined as previously.

Combined tests with PFA and UV: The spiked wastewater effluent was treated with PFA so that its concentrations were 0.25 and 0.5 and 1.0 mg/L and the UV-irradiations were 15, 25 and 50 mWs/cm$^2$ as all three times three combinations of PFA and UV. The effect of only PFA was first for 60 seconds and then the UV-irradiation was started by switching the lamp on and after desired the irradiation doses the lamp was switched off and the total PFA treatment time was continued up to 10 minutes and quenched then as PFA treatment.

E. coli and Enterococci were analyzed by the spread-plate-technique. E. coli were cultivated on Chromocult agar (Merck, KGaA, Germany) and incubated at 37 °C for 21+3 h (preferring 2 days) and Enterococci on Slanez & Bartley agar (Lab M, IDG plc, Bury, Lancashire, UK) and incubated at 37 °C for 48+3 h. E. coli were confirmed by oxidase. Bacterial numbers were calculated as CFU/ml (CFU = Colony Forming Unit) and reductions were also determined. These bacterial determination methods are describes in ISO-9308-1 (E. coli) and SFS-EN ISO 7899-2 (Enterococci).

Effect on E.coli with the combined treatment of UV and PFA can be seen in the Table 2 and effect on Enterococci in the table 3.

A combination of PFA and UV gives a higher reduction of E.coli and Enterococci then the individual treatments alone. It's also obvious that substantial savings in UV energy can be done.

Table 2. The effect of the treatments on E-coli

| Treatment | Log reduction |
|---|---|
| UV 25 mWs/cm$^2$ | 1.72 |
| PFA 0.25 mg/l | 1.72 |
| PFA 0.25 mg/l + UV 25 mWs/cm$^2$ | 3.52 |

Table 3. The effect of the treatments on Enterococci

| Treatment | Log reduction |
|---|---|
| UV 15 mWs/cm$^2$ | 1.12 |
| PFA 0.25 mg/l | 3.08 |
| PFA 0.25 mg/l + UV 15 mWs/cm$^2$ | 4.53 |

Example 3.

Additive and synergistic effects were calculated from the results of the treatments in the example 2. The graphs of Log reduction vs. dose were made and the values below were interpolated from the linear function of the data points. By combining UV and PFA interpolated doses, additive and synergistic effects can be seen. As example, a combination of 0.06 mg/l of PFA and a UV dose of 15 mWs/cm$^2$ shows a synergistic effect. To get the same reduction of E.coli by the individual treatments alone, 0.33 mg/l PFA respectively 21.5 mWs/cm$^2$ UV is needed. The synergy index (SI) is 0.88, indicating a synergy. The combination of 0.22 mg/l PFA and 15 mWs/cm$^2$ UV gives a SI of 1, which means an additive effect. The results can be seen in Table 4.

Table 4. SI values in E.coli experiment

| Log reduction | 1.5 | 2 |
|---|---|---|
| PFA alone mg/l ($Q_A$) | 0.33 | 0.44 |
| UV alone ($Q_B$) | 21.46 | 28.61 |
| PFA mg/l in combination with UV ($Q_a$) | 0.06 | 0.22 |
| UV in combination with PFA ($Q_b$) | 15 | 15 |
| SI | 0.88 | 1.02 |

Another example shows results for Enterococci. The combinations 0.03 mg/l PFA and UV 15 mWS/cm$^2$, 0.19 mg/l PFA and UV 15 mWs/cm$^2$ and 0.35 mg/l PFA and UV 15 mWs/cm$^2$ all shows synergistic effects, while the combination 0.52 mg/l PFA and UV 15 mWs/cm$^2$ shows additive effect. The results can be seen in Table 5.

Table 5. SI values in Enterococci experiment

| Studied Log reduction | 2.5 | 3 | 3.5 | 4 |
|---|---|---|---|---|
| PFA alone mg/l ($Q_A$) | 0.47 | 0.56 | 0.66 | 0.75 |
| UV alone ($Q_B$) | 28.84 | 34.60 | 40.37 | 46.14 |
| PFA mg/l in combination with UV ($Q_a$) | 0.03 | 0.19 | 0.35 | 0.52 |
| UV in combination with PFA ($Q_b$) | 15 | 15 | 15 | 15 |
| SI | 0.57 | 0.77 | 0.93 | 1.01 |

**Claims**

1. A process for reduction of the presence of microorganisms in water using an energy source and an additive **characterised in that** the energy source is UV radiation and the additive comprises performic acid, wherein the water to be treated is subjected to UV radiation during and/or after the addition of the additive containing performic acid to the water, and the performic acid is continuously added to the waters to be disinfected in an amount of 0.1 to 5 mg/l and intermittent instantaneous shock dosing using performic acid in an amount of 10 to 50 mg/l is performed and a weekly sum of the shock dosage periods performed is 0.3-30 h.

2. The process according to claim 1, wherein the microorganisms are bacteria and/or viruses.

3. The process according to claim 1, wherein bacteria and/or viruses are enteric bacteria and/or viruses.

4. The process according to claim 3, wherein the bacteria are selected from Escherichia coli, Enterococcus faecalis and Enterococcus faecium.

5. The process according to claim 2, wherein the viruses are bacteriophages.

6. The process according to claim 5, wherein the bacteriophage is MS2.

7. The process according to any one of claims 1 to 6, wherein the performic acid is continuously added to the waters to be disinfected in an amount of 0.2-4 mg/l, preferably 0.3-2 mg/l, and preferably 0.4-1 mg/l.

**8.** The process according to any one of claims 1 or 7, wherein the addition of performic acid intermittently is performed as an instantaneous chock dosing in an amount of 15 to 40 mg/l.

**9.** Use of an energy source and an additive for reduction of the presence of microorganisms in water **characterised in that** the energy source is UV radiation and the additive comprises performic acid, wherein the water to be treated is subjected to UV radiation during and/or after the addition of the additive containing performic acid to the water, and the performic acid is continuously added to the waters to be disinfected in an amount of 0.1 to 5 mg/l and intermittent instantaneous shock dosing using performic acid in an amount of 10 to 50 mg/l is performed and a weekly sum of the shock dosage periods performed is 0.3-30 h.

**Patentansprüche**

**1.** Verfahren zum Verringern des Vorhandenseins von Mikroorganismen in Wasser unter Verwendung einer Energiequelle und eines Zusatzstoffs, **dadurch gekennzeichnet, dass** die Energiequelle UV-Strahlung ist und der Zusatzstoff Perameisensäure umfasst, wobei das zu behandelnde Wasser während und/oder nach dem Zugeben des Zusatzstoffs, der Perameisensäure enthält, zu dem Wasser UV-Strahlung ausgesetzt wird und die Perameisensäure in einer Menge von 0,1 bis 5 mg/l kontinuierlich zu dem zu desinfizierenden Wasser zugegeben wird und intermittierende sofortige Stoßdosierung unter Verwendung von Perameisensäure in einer Menge von 10 bis 50 mg/l durchgeführt wird und die wöchentliche Summe der Dauer der durchgeführten Stoßdosierungen 0,3-30 h beträgt.

**2.** Verfahren gemäß Anspruch 1, wobei die Mikroorganismen Bakterien und/oder Viren sind.

**3.** Verfahren gemäß Anspruch 1, wobei Bakterien und/oder Viren enterische Bakterien und/oder Viren sind.

**4.** Verfahren gemäß Anspruch 3, wobei die Bakterien ausgewählt sind aus Escherichia coli, Enterococcus faecalis und Enterococcus faecium.

**5.** Verfahren gemäß Anspruch 2, wobei die Viren Bakteriophagen sind.

**6.** Verfahren gemäß Anspruch 5, wobei der Bakteriophage MS2 ist.

**7.** Verfahren gemäß einem der Ansprüche 1 bis 6, wobei die Perameisensäure in einer Menge von 0,2-4 mg/l, vorzugsweise 0,3-2 mg/l und vorzugsweise 0,4-1 mg/l kontinuierlich zu dem zu desinfizierenden Wasser zugegeben wird.

**8.** Verfahren gemäß einem der Ansprüche 1 oder 7, wobei das intermittierende Zugeben von Perameisensäure als sofortige Stoßdosierung in einer Menge von 15 bis 40 mg/l durchgeführt wird.

**9.** Verwendung einer Energiequelle und eines Zusatzstoffs zum Verringern des Vorhandenseins von Mikroorganismen in Wasser, **dadurch gekennzeichnet, dass** die Energiequelle UV-Strahlung ist und der Zusatzstoff Perameisensäure umfasst, wobei das zu behandelnde Wasser während und/oder nach dem Zugeben des Zusatzstoffs, der Perameisensäure enthält, zu dem Wasser UV-Strahlung ausgesetzt wird und die Perameisensäure in einer Menge von 0,1 bis 5 mg/l kontinuierlich zu dem zu desinfizierenden Wasser zugegeben wird und intermittierende sofortige Stoßdosierung unter Verwendung von Perameisensäure in einer Menge von 10 bis 50 mg/l durchgeführt wird und die wöchentliche Summe der Dauer der durchgeführten Stoßdosierungen 0,3-30 h beträgt.

**Revendications**

**1.** Procédé de réduction de la présence de microorganismes dans de l'eau en utilisant une source d'énergie et un additif, **caractérisé en ce que** la source d'énergie est un rayonnement UV et l'additif comprend de l'acide performique, où l'eau devant être traitée est soumise à un rayonnement UV pendant et/ou après l'addition de l'additif contenant de l'acide performique à l'eau, et l'acide performique est ajouté en continu aux eaux devant être désinfectées selon une quantité allant de 0,1 à 5 mg/l et un dosage choc instantané intermittent en utilisant de l'acide performique selon une quantité allant de 10 à 50 mg/l est effectué et une somme hebdomadaire des périodes de dosage choc effectuées est de 0,3-30 h.

2. Procédé selon la revendication 1, dans lequel les microorganismes sont des bactéries et/ou des virus.

3. Procédé selon la revendication 1, dans lequel les bactéries et/ou les virus sont des bactéries et/ou des virus entériques.

4. Procédé selon la revendication 3, dans lequel les bactéries sont choisies parmi *Escherichia coli, Enterococcus faecalis* et *Enterococcus faecium.*

5. Procédé selon la revendication 2, dans lequel les virus sont des bactériophages.

6. Procédé selon la revendication 5, dans lequel le bactériophage est MS2.

7. Procédé selon l'une quelconque des revendications 1 à 6, dans lequel l'acide performique est ajouté en continu aux eaux devant être désinfectées selon une quantité de 0,2-4 mg/l, préférablement 0,3-2 mg/l, et préférablement 0,4-1 mg/l.

8. Procédé selon l'une quelconque des revendications 1 ou 7, dans lequel l'addition d'acide performique de manière intermittente est effectuée sous forme d'un dosage choc instantané selon une quantité allant de 15 à 40 mg/l.

9. Utilisation d'une source d'énergie et d'un additif pour la réduction de la présence de microorganismes dans de l'eau, **caractérisée en ce que** la source d'énergie est un rayonnement UV et l'additif comprend de l'acide performique, où l'eau devant être traitée est soumise à un rayonnement UV pendant et/ou après l'addition de l'additif contenant de l'acide performique à l'eau, et l'acide performique est ajouté en continu aux eaux devant être désinfectées selon une quantité allant de 0,1 à 5 mg/l et un dosage choc instantané intermittent en utilisant de l'acide performique selon une quantité allant de 10 à 50 mg/l est effectué et une somme hebdomadaire des périodes de dosage choc effectuées est de 0,3-30 h.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2007163966 A

**Non-patent literature cited in the description**

• **J. KOIVUNEN ; H HEINONEN-TANSKI.** *Water Research,* 2005, vol. 39, 1519-1526
• **R GEHR et al.** *Water Science & Technology,* 2009, vol. 59 (1), 89-96

• **F. C. KULL et al.** *Applied Microbiology,* 1961, vol. 9, 538